# EUROPEAN PATENT SPECIFICATION

(11) **EP 0 963 825 B1**
(45) Date of publication and mention of the grant of the patent: **24.09.2003**
(21) Application number: 99830299.6
(22) Date of filing: 14.05.1999
(51) Int. Cl.: B29B 17/00, B02C 17/00, B02C 17/18

(54) **Mecanochemical process for treating plastic materials**
Verfahren zur Behandlung von Kunststoffen auf mechanochemischem Weg
Procédé pour traiter de matières plastiques par voi mécanochimique

(30) Priority: 10.06.1998 IT RM980372
(43) Date of publication of application: 15.12.1999
(73) Proprietor: ENEA ENTE PER LE NUOVE TECNOLOGIE, L'ENERGIA E L'AMBIENTE, 00196 Roma (IT)
(72) Inventor: Padella, Franco, 00061 Anguillara (RM) (IT); Magini, Mauro, 00155 Roma (IT); Incocciati, Emma, 00149 Roma (IT)
(74) Representative: Tonon, Gilberto

(56) References cited:
- EP-A- 0 610 162
- DE-A- 4 220 623
- GB-A- 1 334 718
- GB-A- 1 453 851
- US-A- 3 666 185
- US-A- 3 718 284
- US-A- 5 533 680

## Description

The present invention relates to a process for grinding plastic materials - in presence of carbon dioxide in a liquid state inside the grinding vessel - capable of destructuring the plastic materials and to ensure the compatibility of heterogeneous plastic materials in order to allow the recovery thereof from urban and industrial waste.

As it is known, the possibility of subjecting the plastic materials to a mechanical treatment was examined in recent years by Shaw and co-workers (1).

These researchers demonstrated that grinding with the Ball Grinding technique at a temperature lower than the glass transition temperature of the plastic materials, it is possible to crush such materials in a way wholly analogous to that carried out on the metallic or ceramic materials.

GB-A-1.334.718 refers to the recovery of rubber from discarded fabric or fiber reinforced rubber articles. GB-A-1.453.852 refers to a method for reclaiming wire and insulating material from insulated wire. EP-A-610162 refers to the cryogenic transformation and sorting of solid municipal waste. In all these documents the starting material is cooled at a temperature below the embrittlement temperature before grinding.

The present invention provides a process for grinding plastic materials having characteristics that are radically innovative with respect to this process, and technical effects that are as much unexpected as advantageous.

The process for grinding plastic materials according to the present invention is carried out in presence of carbon dioxide in a liquid state inside the grinding vessel preferably at room temperature.

The grinding vessel can be selected from the group comprising the vibrating mills, the ball mills, and the attrition means provided of grinding bodies. The grinding bodies are preferably ball-shaped.

The weight ratio between the carbon dioxide and the plastic materials can be comprised within the range 5-50.

The weight ratio between the carbon dioxide and the grinding bodies can be comprised within the range 0.01 - 10, preferably within the range 0.05 - 1.5.

The grinding times, depending on the chemical nature of the plastic materials to be ground, anyhow are longer than one minute.

A further subject of the present invention is represented by the materials, in a fibrous or in a powdery state, obtainable from the above described grinding process.

The grinding process according to the invention finds important applications in the mechanochemistry and in the environmental protection fields.

In fact, the mechanical energy developed and transferred, and the destructuring at a molecular level carried out in the course of the grinding process according to the invention, allow the synthesis of new polymers, or of polymeric matrix compounds, having peculiar properties in the mechanochemistry field, and - in the field of the environmental protection - the compatibilization of heterogeneous plastic materials and, therefore, the recycling of plastic waste of urban or industrial origin.

Taking into account the fact that the processing times are extremely short and that the high solvent power of the carbon dioxide is capable of solubilising the additives of the polymer products on the market, the process according to the invention can be effectively used in the field of the recovery of the plastic materials deriving from urban and industrial waste.

The mechanisms underlying the process according to the invention are not yet completely clarified. However, the following working hypotheses can be made. Under the operational conditions defining the grinding process according to the present invention the carbon dioxide is probably to be found in a dynamic equilibrium state, not *far from* the liquid-vapor transition zone.

Under such conditions, it is highly probable that during a collision between the grinding body and the grinding vessel wall (2, 3), due to the sudden energy transfer, the carbon dioxide trapped in the event undergoes an instantaneous "microexplosive" vaporisation, with disruptive effects on the material that is trapped as well, which in turn result in the crystal structure destructuring. Moreover, as the possibility of producing free radicals into the polymers by the mechanochemical way is well known (4), it is assumed that the combination of a deep destructuring of the molecular order with a high free radicals concentration during the process, and the consequent possibility of crosslinks, might be advantageously exploited in the formulation of new polymer mixtures.

So far only a general description of the present invention has been given. A more detailed description of its embodiments will be given hereinafter, making reference to the figures and to the examples, aimed at making apparent the objects, characteristics, advantages and operation modes thereof.

Figure 1 shows a microphotography of the material obtained through a 10-minutes grinding in a vibrating mill of the heterogeneous plastics deriving from urban solid waste with the process according to the invention.

Figure 2 shows the comparison between the Differential Scanning Calorimetry (DSC) plotting of polyethylene terephtalate (PET) prior to (plotting a) and after (plotting b) the grinding process according to the invention.

Figure 3 shows the X-ray diffraction spectrum of the polystyrene (PS) prior to (plotting a) and after (plotting b) having been subjected to the grinding process according to the invention.

Figure 4 shows the X-ray diffraction spectrum of the low-density polyethylene (PELD) prior to (plotting a) and after (plotting b) having been subjected to the grinding process according to the present invention.

### Example 1

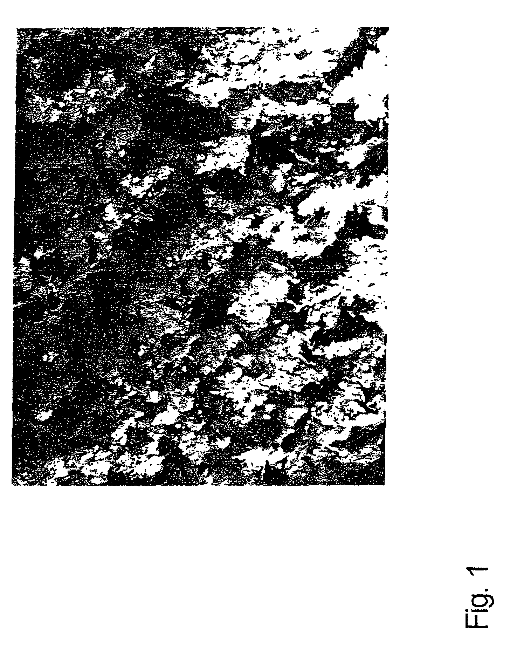

1 g heterogeneous plastics recovered from urban solid wastes (mainly consisting of fragments of polypropylene, polythene, polyethylene terephtalate and other plastic residues from household use), was subjected to the grinding process according to the invention, for 7 minutes in a vibrating mill. The reaction vessel contained 150 g of tungsten carbide balls having 8mm and 12mm diameter, and 15 g carbon dioxide introduced therein in a solid state. The vessel seal was not lower than 60 atm and the final temperature of the process was 30°C. Figure 1 microphotography (10x) shows that the material obtained is completely destructurated and that the starting heterogeneous plastics are completely homogenized.

### Example 2

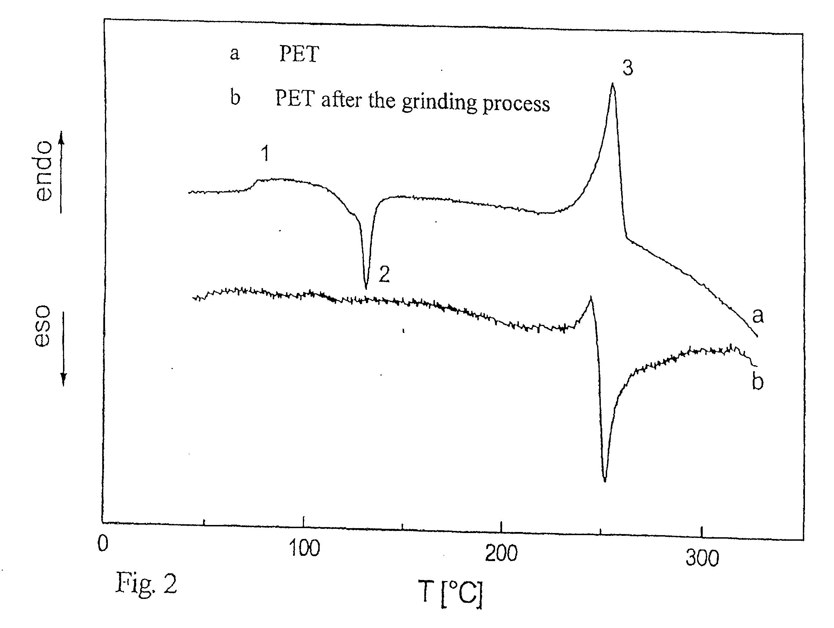

1 g polyethylene terephthalate (PET) was subjected to the grinding process according to the invention for 10 minutes in a vibrating mill. The reaction vessel contained 200 g of tungsten carbide balls having 8mm and 12mm diameter and 30 g carbon dioxide introduced therein in a solid state. The vessel, having copper rings, ensured a seal up to a pressure of 100 atm and the final temperature of the process was 30°C. Figure 2 shows the DSC (Differential Scanning Calorimetry) plottings of the PET prior to (plotting a of figure 2) and after (plotting b of figure 2) the grinding process. The comparison of the two plottings highlights the extreme destructuring of the polymer order after the grinding. In fact, the plotting (a) exhibits the signals related to the polymer glass transition (point 1) crystallisation (point 2) and fusion (point 3). On the contrary, the plotting (b), related to the product after grinding, does not exhibit any glass transition, showing that the crystallisation peak overlaps (and is greater than) the one related to the melting. Such characteristic indicates that the yielded amorphous product has a degree of stability so high as to require a molecular mobility equal to that of the liquid polymer for the arrangement process of the amorphous product, which is however concurrent with the melting process.

### Example 3

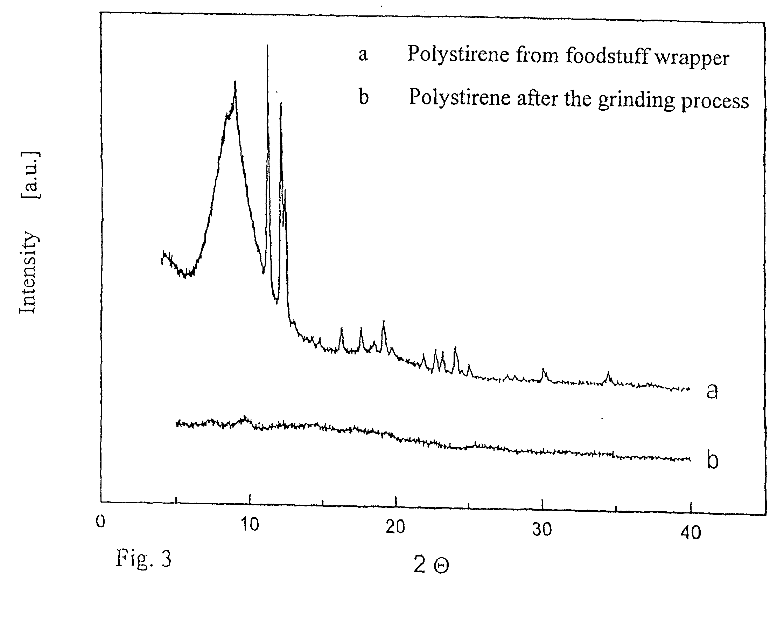

2 g polystyrene (PS) deriving from a foodstuff wrapper were subjected to the grinding process according to the invention, for 10 minutes in a vibrating mill. The steel reaction vessel contained 200 g of tungsten carbide balls of 8mm and 12mm diameter and 20 g carbon dioxide introduced therein in a solid state. The steel vessel was provided with an insulation jacket with a cooling circuit set at a temperature of 20°C. The high destructuring rate resulting from the process is highlighted by the comparison between the X-ray diffraction spectrum of the PS prior to and after the grinding. In fact, while in the plotting a of figure 3 the peaks related to the crystalline fraction can be seen, the X-ray spectrum after the grinding of the material (see plotting b of figure 3) does not exhibit any crystalline peak.

### Example 4

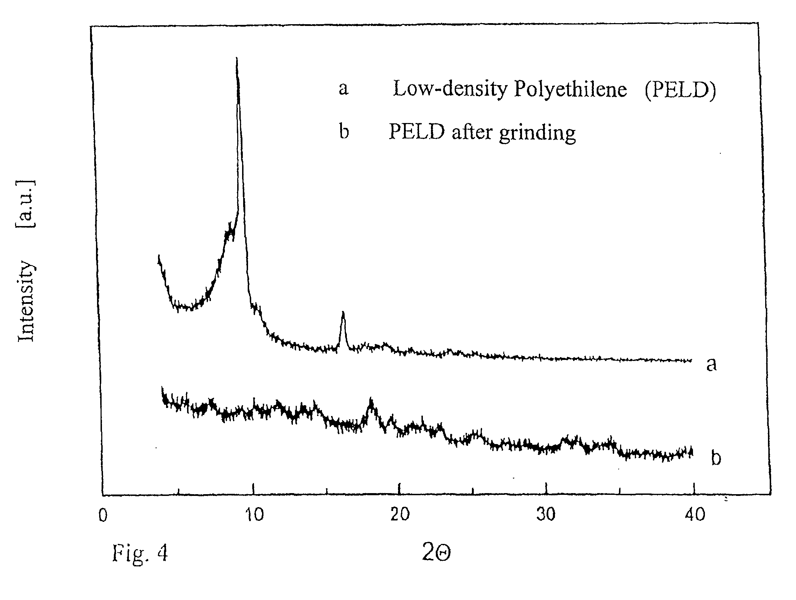

2 g low-density Polyethylene (PELD) were subjected to the grinding process according to the invention, for 5 minutes in a vibrating mill. The reaction vessel contained 100 g of tungsten carbide balls of 8mm and 12mm diameter and 15 g carbon dioxide introduced therein in a solid state. The vessel seal was not lower than 60 atm and the process final temperature 30°C. The high destructurating rate resulting from the process is highlighted by the comparison between the X-ray diffraction spectrum of the PELD prior to (plotting a of figure 4) and after (plotting b of figure 4) having been subjected to the grinding process. In this case as well, it can be remarked that after the grinding the X-ray spectrum does not exhibit any crystalline peak anymore.

### Bibliographical references

(1) W.J.D. Shaw, Mater. Science Forum, 269-272, 19 (1998);
(2) M. Magini and A. Iasonna, Mater. Trans., JIM, 36,123 (1995);
(3) M. Magini, A. Iasonna and F. Padella, Scripta Materialia, 34, 13 (1996);
(4) A. Casale and R.S. Porter, Acts of the XVIII AIM Meeting, 9-14 June 1996.

## Claims

1. A process for grinding plastic materials, **characterized in that** it is carried out in the presence of carbon dioxide in a liquid state inside the grinding vessel.

2. The process for grinding plastic materials according to claim 1, wherein the grinding vessel is at room temperature at the moment of the carbon dioxide introduction.

3. The process for grinding plastic materials according to claim 1 or 2, wherein the grinding vessel is selected from the group comprising the vibrating mills, the ball mills and the attrition means provided with grinding bodies.

4. The process for grinding plastic materials according to claim 3, wherein the grinding bodies are ball-shaped.

5. The process for grinding plastic materials as in any one of the preceding claims, wherein the weight ratio between the carbon dioxide and the plastic materials is comprised in the range 5 - 50.

6. The process for grinding plastic materials according to any one of claims 1 to 5, wherein the weight ratio between the carbon dioxide and the grinding bodies is comprised in the range 0.01 - 10.

7. The process for grinding plastic materials according to claim 6, wherein the weight ratio between the carbon dioxide and the grinding bodies is comprised in the range 0.05 - 1.5.

8. The process for grinding plastic materials according to any one of claims 1 to 7, wherein the grinding times top one minute.

9. Use of the process for grinding plastic materials according to claims 1 to 8, in mechanochemistry for the synthesis of new polymers, new polymer compositions or compounds having a polymer matrix.

10. Use of the process for grinding plastic materials according to claims 1 to 8, in the field of the environmental protection for the compatibilisation and the recycling of heterogeneous plastic materials recovered from urban or industrial wastes.

## Patentansprüche

1. Verfahren zum Mahlen von Kunststoffen, **dadurch gekennzeichnet, dass** es in Gegenwart von Kohlendioxid in einem flüssigen Zustand im Inneren des Mahlgefäßes durchgeführt wird.

2. Verfahren zum Mahlen von Kunststoffen nach Anspruch 1, wobei das Mahlgefäß zum Zeitpunkt der Einführung des Kohlendioxids Raumtemperatur aufweist.

3. Verfahren zum Mahlen von Kunststoffen nach Anspruch 1 oder 2, wobei das Mahlgefäß ausgewählt ist aus der Gruppe umfassend die Schwingmühlen, die Kugelmühlen und die Reibeinrichtungen, die mit Mahlkörpern versehen sind.

4. Verfahren zum Mahlen von Kunststoffen nach Anspruch 3, wobei die Mahlkörper kugelförmig sind.

5. Verfahren zum Mahlen von Kunststoffen wie in einem der vorangehenden Ansprüche, wobei das Gewichtsverhältnis zwischen dem Kohlendioxid und den Kunststoffen im Bereich von 5-50 liegt.

6. Verfahren zum Mahlen von Kunststoffen nach einem der Ansprüche 1 bis 5, wobei das Gewichtsverhältnis zwischen dem Kohlendioxid und den Mahlkörpern im Bereich von 0,01 - 10 liegt.

7. Verfahren zum Mahlen von Kunststoffen nach Anspruch 6, wobei das Gewichtsverhältnis zwischen dem Kohlendioxid und den Mahlkörpern im Bereich von 0,05 -1,5 liegt.

8. Verfahren zum Mahlen von Kunststoffen nach einem der Ansprüche 1 bis 7, wobei die Mahldauer eine Minute übersteigt.

9. Verwendung des Verfahrens zum Mahlen von Kunststoffen nach den Ansprüchen 1 bis 8 in der Mechanochemie für die Synthese von neuen Polymeren, neuen Polymerzusammensetzungen oder Verbindungen mit einer Polymermatrix.

10. Verwendung des Verfahrens zum Mahlen von Kunststoffen nach den Ansprüchen 1 bis 8 auf dem Gebiet des Umweltschutzes für die Kompatibilisierung und das Recycling von heterogenen Kunststoffen, die aus städtischen oder gewerblichen Abfällen gewonnen werden.

## Revendications

1. Un procédé de broyage de matières plastiques, **caractérisé en ce qu'**il est mis en oeuvre en présence de dioxyde de carbone dans un état liquide à l'intérieur du récipient de broyage.

2. Le procédé de broyage de matières plastiques selon la revendication 1, dans lequel le récipient de broyage est à la température ambiante au moment de l'introduction du dioxyde de carbone.

3. Le procédé de broyage de matières plastiques selon la revendication 1 ou 2, dans lequel le récipient de broyage est choisi dans le groupe comprenant les broyeurs à vibration, les broyeurs à billes et les moyens à attrition munis de corps de broyage.

4. Le procédé de broyage de matières plastiques selon la revendication 3, dans lequel les corps de broyage sont en forme de billes.

5. Le procédé de broyage de matières plastiques selon l'une quelconque des revendications précédentes, dans lequel le rapport pondéral entre le dioxyde de carbone et les matières plastiques se situe dans la gamme de 5 à 50.

6. Le procédé de broyage de matières plastiques selon l'une quelconque des revendications 1 à 5, dans lequel le rapport pondéral entre le dioxyde de carbone et les corps de broyage se situe dans la gamme de 0,01 à 10.

7. Le procédé de broyage de matières plastiques selon la revendication 6, dans lequel le rapport pondéral entre le dioxyde de carbone et les corps de broyage se situe dans la gamme de 0,05 à 1,5.

8. Le procédé de broyage de matières plastiques selon l'une quelconque des revendications 1 à 7, dans lequel les durées de broyage dépassent une minute.

9. Utilisation du procédé de broyage de matières plastiques selon les revendications 1 à 8, en mécanochimie pour la synthèse de nouveaux polymères, de nouvelles compositions de polymères ou de composés ayant une matrice polymère.

10. Utilisation du procédé de broyage de matières plastiques selon les revendications 1 à 8, dans le domaine de la protection environnementale pour la compatibilisation et le recyclage de matières plastiques hétérogènes récupérées à partir de déchets urbains ou industriels.
